# EUROPÄISCHE PATENTSCHRIFT

(11) **EP 2 915 611 B1**
(45) Veröffentlichungstag und Bekanntmachung des Hinweises auf die Patenterteilung: **08.08.2018**
(21) Anmeldenummer: 15157090.0
(22) Anmeldetag: 02.03.2015
(51) Int. Cl.: B22F 3/105, B22F 3/24, C22F 1/00, B33Y 10/00, B33Y 30/00, B33Y 40/00, B33Y 80/00

(54) **Vorrichtung und Verfahren zum generativen Herstellen eines Bauteils**
Device and method for the generative production of a component
Dispositif et procédé de fabrication générative d'un composant

(30) Priorität: 06.03.2014 DE 102014204123
(43) Veröffentlichungstag der Anmeldung: 09.09.2015
(73) Patentinhaber: MTU Aero Engines AG, 80995 München (DE)
(72) Erfinder: Schlick, Georg, 80809 München (DE); Jakimov, Andreas, 81245 München (DE); Hanrieder, Herbert, 85411 Hohenkammer (DE)

(56) Entgegenhaltungen:
- EP-A2- 2 583 773
- WO-A2-2014/202413
- WO-A2-2014/202415
- CN-A- 102 179 517
- DE-A1-102012 206 122
- US-A- 2 479 341

## Beschreibung

Die vorliegende Erfindung betrifft eine Vorrichtung und ein Verfahren zum generativen Herstellen eines Bauteils, insbesondere eines Gasturbinentriebwerkbauteils.

Insbesondere Gasturbinenbauteile wie Leit- oder Laufschaufeln sind aufgrund ihrer komplexen Geometrien und hohen Beanspruchungen schwierig herzustellen.

Aus betriebsinterner Praxis ist es daher bekannt, insbesondere solche Bauteile generativ herzustellen, indem die Bauteile durch schichtweises lokales Verfestigen eines Ausgangsmaterials schichtweise aufgebaut werden.

Aus betriebsinterner Praxis ist es ebenfalls bekannt, vorgebbare Bereiche eines Arbeitsraums, in dem das Bauteil generativ hergestellt wird, durch Induktoren induktiv zu temperieren. Dadurch kann in vorteilhafter Weise das Ausgangsmaterial vorgewärmt werden, um sein lokales Verfestigen zu verbessern. Zusätzlich oder alternativ kann das entstehende Bauteil temperiert, insbesondere nachgewärmt oder geführt abgekühlt werden, insbesondere, um sein Gefüge und/oder Wärmespannungen zu beeinflussen.

Die DE 10 2012 206 122 A1 offenbart eine Vorrichtung zur generativen Herstellung von Bauteilen mittels selektivem Bestrahlen eines Pulverbetts, wobei eine Induktionsheizanordnung mit zwei kreuzförmig zueinander bewegbaren Induktoren zum Erwärmen des Pulverbetts vorgesehen ist.

Die US 2 479 341 A offenbart eine induktive Heizeinrichtung zum Erwärmen und Härten massiver Metallteile, wobei die Heizeinrichtung zwei oder mehr parallel betriebene Induktionsspulen aufweist.

Eine Aufgabe einer Ausführung der vorliegenden Erfindung ist es, das generative Herstellen eines Bauteils, insbesondere eines Gasturbinentriebwerkbauteils, zu verbessern.

Diese Aufgabe wird durch eine Vorrichtung mit den Merkmalen des Anspruchs 1 sowie ein Verfahren mit den Merkmalen des Anspruchs 11 gelöst. Vorteilhafte Ausführungsformen der Erfindung sind Gegenstand der Unteransprüche.

Die Vorrichtung gemäß Anspruch 1 zum generativen Herstellen eines Bauteils, insbesondere eines Gasturbinentriebwerkbauteils, weist einen Arbeitsraum zur Aufnahme eines Ausgangsmaterials auf.

Der Arbeitsraum ist in einer Ausführung durch einen Rahmen und eine Plattform begrenzt, die in einer Weiterbildung relativ zueinander verstellbar, insbesondere verschiebbar, sind, um sukzessive neue Schichten von Ausgangsmaterial über dem entstehenden Bauteil anordnen zu können. Das Ausgangsmaterial kann schüttgut-, insbesondere pulverartig, pastös oder flüssig, insbesondere zähflüssig, sein.

Die Vorrichtung weist ein Verfestigungsmittel, insbesondere einen Laser, zum schichtweisen lokalen Verfestigen bzw. Binden, insbesondere (Auf)Schmelzen oder Sintern, des in dem Arbeitsraum angeordneten Ausgangsmaterials auf, um das Bauteil schichtweise in einer Schichtaufbaurichtung herzustellen. Das Ausgangsmaterial kann durch das Verfestigungsmittel schichtweise thermisch, optisch und/oder chemisch lokal verfestigt bzw. gebunden, insbesondere (aufgeschmolzen oder gesintert werden, insbesondere mit einer in Schichtaufbaurichtung darunterliegenden Schicht. In einer Ausführung weist die Vorrichtung eine Steuerung auf zum Steuern des Verfestigungsmittels derart, dass es das in dem Arbeitsraum angeordnete Ausgangsmaterial schichtweise lokal in Querschnittsbereichen des herzustellenden Bauteils verfestigt bzw. bindet. Die Schichtaufbaurichtung kann in einer Ausführung mit einer Verstellrichtung der Plattform übereinstimmen und/oder, wenigstens im Wesentlichen, der Gravitationsrichtung entgegengesetzt bzw. vertikal nach oben orientiert sein.

Die Vorrichtung weist weiter eine bewegliche Induktionsheizanordnung mit einem ersten Induktor und einem zweiten Induktor zum induktiven Temperieren in vorgebbaren Bereichen des Arbeitsraums auf.

Der erste und/oder zweite Induktor können insbesondere je wenigstens eine elektrische Windung aufweisen, die in einer Ausführung wenigstens 180° bzw. wenigstens eine halbe bzw. U- oder C-artige Schleife aufweist. In einer Ausführung sind der erste und zweite Induktor durch die Steuerung separat bzw. unabhängig voneinander mit elektrischem Strom, insbesondere Wechselstrom, beaufschlagbar.

Erfindungsgemäß greift der erste Induktor - wenigstens in einer Betriebsstellung, insbesondere nur zeitweise oder permanent - in Richtung zu dem Arbeitsraum hin, insbesondere entgegen der Schichtaufbaurichtung oder senkrecht zu dieser, in den zweiten Induktor ein.

Auf diese Weise können der erste und zweite Induktor dichter an dem zu temperierenden Bereich positioniert und so insbesondere ein Induktionsstrom besser eingekoppelt werden.

In einer Ausführung ist bzw. wird entsprechend - wenigstens in einer Betriebsstellung, insbesondere nur zeitweise oder permanent - eine arbeitsraumzugewandte Wirkfläche, insbesondere eine arbeitsraumnächste Windung, des ersten Induktors von einer arbeitsraumzugewandten Wirkfläche, insbesondere einer arbeitsraumnächsten Windung, des zweiten Induktors in Schichtaufbaurichtung um weniger als eine Wandstärke des ersten Induktors, gemessen an dieser arbeitsraumzugewandten Wirkfläche, beabstandet, insbesondere um höchstens die halbe Wandstärke. Auf diese Weise können erster und zweiter Induktor vertikal dicht an den zu temperierenden Bereich positioniert werden.

In einer anderen Ausführung ist bzw. wird entsprechend - wenigstens in einer Betriebsstellung, insbesondere nur zeitweise oder permanent - eine arbeitsraumzugewandte Wirkfläche, insbesondere eine arbeitsraumnächste Windung, des ersten Induktors von einer arbeitsraumzugewandten Wirkfläche, insbesondere einer arbeitsraumnächsten Windung, des zweiten Induktors senkrecht zur Schichtaufbaurichtung um weniger als eine Wandstärke des ersten Induktors, gemessen an dieser arbeitsraumzugewandten Wirkfläche, beabstandet, insbesondere um höchstens die halbe Wandstärke. Auf diese Weise können erster und zweiter Induktor seitlich bzw. horizontal dicht an den zu temperierenden Bereich positioniert werden.

Erfindungsgemäß ist der erste Induktor relativ zu dem zweiten Induktor, insbesondere manuell und/oder motorisch, verstellbar, insbesondere verschiebbar. Hierdurch können wahlweise unterschiedliche zu temperierende Bereiche vorgegeben bzw. eingestellt bzw. unterschiedliche Bereiche temperiert werden.

Hierzu kann in einer Weiterbildung der erste Induktor an dem zweiten Induktor, insbesondere manuell und/oder motorisch, verstellbar, insbesondere verschiebbar, gelagert sein, so dass der erste Induktor eine Stellbewegung des zweiten Induktors mitmacht und dieser eine Relativstellbewegung überlagern kann.

Der erste Induktor kann in einer Ausführung senkrecht bzw. quer zu der Schichtaufbaurichtung relativ zu dem zweiten Induktor verstellbar, insbesondere verschiebbar sein. Zusätzlich oder alternativ kann der erste Induktor in Schichtaufbaurichtung relativ zu dem zweiten Induktor verstellbar, insbesondere verschiebbar sein. Insbesondere kann ein über oder seitlich neben dem Arbeitsraum angeordneter erste Induktor in Richtung zu dem Arbeitsraum hin oder quer zu diesem relativ zu dem zweiten Induktor verstellbar sein. Zusätzlich oder alternativ kann der erste Induktor senkrecht zu einer Verstellrichtung des verstellbaren zweiten Induktors relativ zu dem zweiten Induktor verstellbar sein, wobei die Verstellrichtung des verstellbaren zweiten Induktors insbesondere in Schichtaufbaurichtung oder senkrecht bzw. quer zu der Schichtaufbaurichtung orientiert sein kann. Eine Verstellung bzw. Verstellbarkeit in einer Richtung im Sinne der vorliegenden Erfindung kann insbesondere eine ausschließliche Verstellung bzw. Verstellbarkeit nur in dieser Richtung sein. Gleichermaßen kann eine Verstellung bzw. Verstellbarkeit in einer Richtung im Sinne der vorliegenden Erfindung auch mit einer Verstellung bzw. Verstellbarkeit in einer anderen Richtung gekoppelt sein. So kann beispielsweise sowohl eine rein vertikale Verstellung als auch eine gegen die Vertikale geneigte Verstellung eine Verstellung in vertikaler Richtung im Sinne der vorliegenden Erfindung sein.

In einer Ausführung weist der ersten Induktor, insbesondere eine arbeitsraumzugewandte Wirkfläche, insbesondere eine arbeitsraumnächste Windung, des ersten Induktors, zwei, insbesondere wenigstens im Wesentlichen parallele oder gekrümmte, Schenkel auf, die sich zwischen zwei, insbesondere wenigstens im Wesentlichen parallelen oder gekrümmten, Schenkeln des zweiten Induktors, insbesondere einer arbeitsraumzugewandten Wirkfläche, insbesondere einer arbeitsraumnächsten Windung, des zweiten Induktors, erstrecken, insbesondere wenigstens im Wesentlichen senkrecht oder parallel zu diesen.

In einer Ausführung weist die Vorrichtung ein bewegliches Verteilungsmittel, insbesondere einen Schieber und/oder einen Ausgangsmaterialaustritt, zum schichtweisen Anordnen von Ausgangsmaterial in dem Arbeitsraum auf.

Nach einem weiteren Aspekt der vorliegenden Erfindung ist der erste und/oder zweite Induktor an diesem beweglichen Verteilungsmittel angeordnet.

Auf diese Weise benötigen der erste bzw. zweite Induktor keine zusätzliche eigene Verstellung, sondern können durch das bewegliche Verteilungsmittel mitbewegt und so wahlweise unterschiedliche zu temperierende Bereiche vorgegeben bzw. eingestellt bzw. unterschiedliche Bereiche temperiert werden.

In einer Ausführung ist der erste Induktor fest oder, insbesondere motorisch, verstellbar, insbesondere verschiebbar an dem Verteilungsmittel angeordnet. Zusätzlich oder alternativ kann der zweite Induktor fest oder, insbesondere motorisch, verstellbar, insbesondere verschiebbar an dem Verteilungsmittel angeordnet sein. Insbesondere kann also der fest an dem Verteilungsmittel angeordnete zweite Induktor starr mit diesem mitbewegt und der verstellbar an dem Verteilungsmittel angeordnete erste Induktor relativ zu diesem und damit relativ zu dem zweiten Induktor verstellt werden. Gleichermaßen kann der fest an dem Verteilungsmittel angeordnete erste Induktor starr mit diesem mitbewegt und der verstellbar an dem Verteilungsmittel angeordnete zweite Induktor relativ zu diesem und damit relativ zu dem ersten Induktor verstellt werden. Gleichermaßen können sowohl der erste Induktor als auch der zweite Induktor verstellbar an dem Verteilungsmittel angeordnet sein und somit relativ zu diesem und relativ zueinander verstellt werden, wobei in einer Ausführung durch das Verteilungsmittel vorteilhaft eine, insbesondere gröbere, Vorpositionierung und durch die Verstellung der Induktoren relativ zu dem Verteilungsmittel eine, insbesondere feinere, End- oder Nachpositionierung erfolgen kann.

Insbesondere, wenn das Verteilungsmittel auch zum Positionieren des ersten und/oder zweiten Induktors während dem Verfestigen genutzt wird, kann in einer Ausführung eine Klinge des Verteilungsmittels zum schichtweisen Anordnen von Ausgangsmaterial in dem Arbeitsraum verstellt, insbesondere versenkt, werden, um sie beispielsweise vor einem ausgangsmaterialverfestigenden Laserstrahl zu schützen. Gleichermaßen kann es zweckmäßig sein, das Verteilungsmittels während dem Verfestigen von dem Arbeitsraum zu beabstanden, um es beispielsweise vor einem ausgangsmaterialverfestigenden Laserstrahl zu schützen.

Erfindungsgemäß umfasst ein Verfahren gemäß Anspruch 11 zum generativen Herstellen eines Bauteils, insbesondere eines Gasturbinentriebwerkbauteils, mittels einer hier erläuterten Vorrichtung ein schichtweises lokales Verfestigen bzw. Binden, insbesondere (Aufschmelzen oder Sintern, des in dem Arbeitsraum angeordneten Ausgangsmaterials, um das Bauteil schichtweise in der Schichtaufbaurichtung herzustellen, wobei vor, während und/oder nach dem Verfestigen einer oder mehrerer Bauteilschichten vorgebbare Bereiche des Arbeitsraums mittels der beweglichen Induktionsheizanordnung induktiv temperiert werden.

Dabei greift der erste Induktor bei dem Temperieren nur zeitweise oder permanent in den zweiten Induktor ein, so dass beide Induktoren näher an dem zu temperierenden Bereich positioniert werden können. Weiterhin wird der erste Induktor relativ zu dem zweiten Induktor, insbesondere manuell und/oder motorisch, verstellt, insbesondere verschoben. Hierdurch können wahlweise unterschiedliche zu temperierende Bereiche vorgegeben bzw. eingestellt bzw. unterschiedliche Bereiche temperiert werden. Zusätzlich kann der erste und/oder zweite Induktor durch das Verteilungsmittel zum Temperieren vor, während und/oder nach dem Verfestigen wenigstens einer Bauteilschicht in unterschiedliche Positionen positioniert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Schnitt längs der Linie I-I in Fig. 2; und
- Fig. 2: einen Verfahrensschritt eines generativen Herstellens eines Gasturbinentriebwerkbauteils mittels einer Vorrichtung nach einer Ausführung der vorliegenden Erfindung.

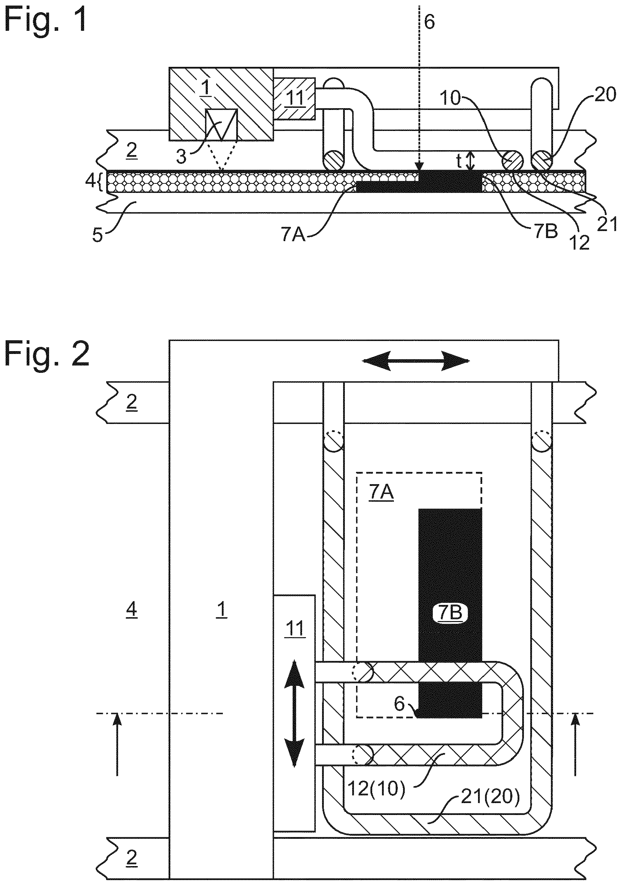

Fig. 2 zeigt eine Draufsicht entgegen einer Schichtaufbaurichtung auf eine Vorrichtung zum generativen Herstellen eines Gasturbinentriebwerkbauteils nach einer Ausführung der vorliegenden Erfindung während eines Verfahrensschritt, Fig. 1 einen Schnitt längs der Linie I-I in Fig. 2.

Die Vorrichtung weist einen Schieber 1 mit einer versenkbaren Klinge 3 zum schichtweisen Anordnen von Ausgangsmaterial 4 in einem Arbeitsraum auf, der durch einen Rahmen 2 und eine in Schichtaufbaurichtung (vertikal in Fig. 1) verstellbare Plattform 5 begrenzt wird. In an sich bekannter Weise wird das Gasturbinenbauteil in aufeinerfolgenden Schichten 7A, 7B generativ hergestellt, indem abwechselnd die Plattform entgegen der Schichtaufbaurichtung um eine Schichtdicke abgesenkt wird, der Schieber eine neue Schicht Ausgangsmaterial über dem entstehenden Bauteil anordnet und ein Laserstrahl 6 eines Lasers (nicht dargestellt) dieses lokal verfestigt.

Der bewegliche Schieber 1 ist auf dem Rahmen 2 senkrecht zur Schichtaufbaurichtung motorisch verschiebbar. Ein zweiter Induktor 20 einer Induktionsheizanordnung zum induktiven Temperieren in vorgebbaren Bereichen des Arbeitsraums ist fest mit dem Schieber 1 verbunden. Auf diese Weise kann der zweite Induktor 20 mit dem Schieber 1 in Fig. 1, 2 horizontal verschoben werden, um wahlweise unterschiedliche Bereiche des Arbeitsraums zu temperieren, wie in Fig. 2 durch einen horizontalen Stellbewegungsdoppelpfeil angedeutet.

Ein erster Induktor 10 der Induktionsheizanordnung zum induktiven Temperieren in vorgebbaren Bereichen des Arbeitsraums ist über einen Schlitten 11 motorisch verstellbar an dem Schieber 1 gelagert, wie in Fig. 2 durch einen vertikalen Stellbewegungsdoppelpfeil angedeutet. Damit ist erste Induktor relativ zu dem zweiten Induktor senkrecht zu der Schichtaufbaurichtung (vertikal in Fig. 1) und senkrecht zu der Verstellrichtung des verstellbaren zweiten Induktors (horizontal in Fig. 2) verstellbar (vertikal in Fig. 2). Auf diese Weise kann der erste Induktor 10 mit dem Schieber 1 in Fig. 1, 2 horizontal und zusätzlich relativ zu dem zweiten Induktor 20 in Fig. 2 vertikal verschoben werden, um wahlweise unterschiedliche Bereiche des Arbeitsraums zu temperieren.

Der zweite Induktor 20 weist eine hufeisenförmige halbe elektrische Schleife mit zwei parallelen L-förmigen Schenkeln (links, rechts in Fig. 1, 2) auf, die sich zwischen dem Rahmen 2 erstrecken und eine arbeitsraumzugewandte Wirkfläche 21 dieser einzigen und mithin arbeitsraumnächsten Windung des zweiten Induktors definieren, welche in Fig. 2 schraffiert angedeutet ist.

Der erste Induktor 10 weist ebenfalls eine hufeisenförmige halbe elektrische Schleife mit zwei parallelen L-förmigen Schenkeln (oben, unten in Fig. 2) auf, die sich senkrecht zu den Schenkeln des zweiten Induktors erstrecken und eine arbeitsraumzugewandte Wirkfläche 12 dieser einzigen und mithin arbeitsraumnächsten Windung des ersten Induktors definieren, welche in Fig. 2 kreuzschraffiert angedeutet ist.

Der erste Induktor 10 ist, ausgehend von dem Schlitten 11, zweifach gegensinnig abgeknickt und greift so permanent in den zweiten Induktor 20 ein. Auf diese Weise können ihre beiden Wirkflächen 12, 21 dicht an dem Arbeitsraum positioniert werden, um insbesondere das zu verfestigende Ausgangsmaterial vorzuwärmen und/oder das entstehende Bauteil nachzuwärmen. Entsprechend ist die Wirkfläche 12 des ersten Induktors von der Wirkfläche 21 des zweiten Induktors in Schichtaufbaurichtung um weniger als eine Wandstärke t des ersten Induktors 10 an dieser arbeitsraumzugewandten Wirkfläche 12 beabstandet (vgl. Fig. 1).

Obwohl in der vorhergehenden Beschreibung exemplarische Ausführungen erläutert wurden, sei darauf hingewiesen, dass eine Vielzahl von Abwandlungen möglich ist.

So kann insbesondere der Aspekt der Anordnung des ersten und/oder zweiten Induktors 10, 20 an dem Schieber 1 auch verwirklicht sein, ohne dass der erste Induktor 10 in den zweiten Induktor 20 eingreift. Gleichermaßen kann der Aspekt des in den zweiten Induktor 20 eingreifenden ersten Induktors 10 auch verwirklicht sein, ohne dass erster und/oder zweiter Induktor 10, 20 an dem Schieber 1 angeordnet sind.

Im Ausführungsbeispiel ist die Induktionsheizanordnung 10, 20 vertikal über dem Arbeitsraum angeordnet. Zusätzlich oder alternativ kann eine Induktionsheizanordnung auch seitlich neben dem Arbeitsraum angeordnet sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichen

- 1: Schieber (Verteilungsmittel)
- 2: Rahmen
- 3: versenkbare Klinge
- 4: Ausgangsmaterial(schicht)
- 5: Plattform
- 6: Laserstahl
- 7A, 7B: Bauteilschicht
- 10: erster Induktor
- 11: Schlitten
- 12: Wirkfläche
- 20: zweiter Induktor
- 21: Wirkfläche

## Patentansprüche

1. Vorrichtung zum generativen Herstellen eines Bauteils (7A, 7B), insbesondere eines Gasturbinentriebwerkbauteils, mit;
einem Arbeitsraum;
einem Verfestigungsmittel, insbesondere einem Laser (6), zum schichtweisen lokalen Verfestigen eines in dem Arbeitsraum angeordneten Ausgangsmaterials (4), um das Bauteil schichtweise in einer Schichtaufbaurichtung herzustellen; und
einer beweglichen Induktionsheizanordnung mit einem ersten Induktor (10) und einem zweiten Induktor (20) zum induktiven Temperieren in vorgebbaren Bereichen des Arbeitsraums;
wobei wenigstens in einer Betriebsstellung der erste Induktor (10) in den zweiten Induktor (20) in Richtung zu dem Arbeitsraum hin eingreift und wobei der erste Induktor (10) relativ zu dem zweiten Induktor (11) verstellbar ist.

2. Vorrichtung nach dem vorhergehenden Anspruch, **dadurch gekennzeichnet, dass** der erste Induktor (10) relativ zu dem zweiten Induktor (20) motorisch verstellbar (11) ist.

3. Vorrichtung nach dem vorhergehenden Anspruch, **dadurch gekennzeichnet, dass** der erste Induktor (10) an dem zweiten Induktor (20), insbesondere motorisch, verstellbar gelagert (11) ist.

4. Vorrichtung nach einem der beiden vorhergehenden Ansprüche, **dadurch gekennzeichnet, dass** der erste Induktor (10) relativ zu dem zweiten Induktor (20) senkrecht zu der Schichtaufbaurichtung und/oder in Schichtaufbaurichtung und/oder senkrecht zu einer Verstellrichtung des verstellbaren zweiten Induktors (20) verstellbar ist.

5. Vorrichtung nach einem der vorhergehenden Ansprüche, **dadurch gekennzeichnet, dass** wenigstens in einer Betriebsstellung eine arbeitsraumzugewandte Wirkfläche (12), insbesondere einer arbeitsraumnächsten Windung, des ersten Induktors (10) von einer arbeitsraumzugewandten Wirkfläche (21), insbesondere einer arbeitsraumnächsten Windung, des zweiten Induktors (20) in Schichtaufbaurichtung oder senkrecht zur Schichtaufbaurichtung um weniger als eine Wandstärke (t) des ersten Induktors (10) an der arbeitsraumzugewandten Wirkfläche beabstandet ist.

6. Vorrichtung nach einem der vorhergehenden Ansprüche, **dadurch gekennzeichnet, dass** der erste Induktor (10) zwei, insbesondere wenigstens im Wesentlichen parallele, Schenkel aufweist, die sich zwischen zwei, insbesondere wenigstens im Wesentlichen parallelen, Schenkeln des zweiten Induktors (20) erstrecken, insbesondere wenigstens im Wesentlichen senkrecht oder parallel zu diesen.

7. Vorrichtung nach einem der vorhergehenden Ansprüche, **dadurch gekennzeichnet, dass** der erste und/oder zweite Induktor (10, 20) an einem Verteilungsmittel, insbesondere einem Schieber (1), zum schichtweisen Anordnen von Ausgangsmaterial (4) in dem Arbeitsraum angeordnet ist.

8. Vorrichtung nach Anspruch 7, **dadurch gekennzeichnet, dass** der erste Induktor (10) fest oder verstellbar an dem Verteilungsmittel angeordnet ist.

9. Vorrichtung nach Anspruch 7 oder 8, **dadurch gekennzeichnet, dass** der zweite Induktor (20) fest oder verstellbar an dem Verteilungsmittel angeordnet ist.

10. Vorrichtung nach einem der Ansprüche 7 bis 9, **dadurch gekennzeichnet, dass** das Verteilungsmittel eine verstellbare, insbesondere versenkbare, Klinge (3) zum schichtweisen Anordnen von Ausgangsmaterial in dem Arbeitsraum aufweist.

11. Verfahren zum generativen Herstellen eines Bauteils, insbesondere eines Gasturbinentriebwerkbauteils (7A, 7B), mittels einer Vorrichtung nach einem der vorhergehenden Ansprüche, mit den Schritten:
Schichtweises lokales Verfestigen des in dem Arbeitsraum angeordneten Ausgangsmaterials (4), um das Bauteil schichtweise in der Schichtaufbaurichtung herzustellen; und
induktives Temperieren in vorgebbaren Bereichen des Arbeitsraums mittels der beweglichen Induktionsheizanordnung vor, während und/oder nach dem Verfestigen wenigstens einer Bauteilschicht (7A, 7B);
wobei bei dem Temperieren der erste Induktor (10) wenigstens zeitweise in den zweiten Induktor (20) in Richtung zu dem Arbeitsraum hin eingreift und wobei der erste Induktor (10) relativ zu dem zweiten Induktor (11) verstellt wird.

## Claims

1. Device for generatively producing a component (7A, 7B), in particular a gas turbine engine component, comprising:
a working chamber;
a solidification means, in particular a laser (6), for locally solidifying, layer by layer, a starting material (4) arranged in the working chamber, in order to produce the component layer by layer in a layer build-up direction; and
a movable induction heating assembly comprising a first inductor (10) and a second inductor (20) for inductively controlling the temperature in specified regions of the working chamber, wherein, at least in an operating position, the first inductor (10) engages in the second inductor (20) in the direction of the working chamber and wherein the first inductor (10) is adjustable (11) relative to the second inductor.

2. Device according to the preceding claim, **characterized in that** the first inductor (10) is adjustable (11) by motor relative to the second inductor (20).

3. Device according to the preceding claim, **characterized in that** the first inductor (10) is mounted on the second inductor (20) so as to be adjustable (11), in particular by motor.

4. Device according to either of the two preceding claims, **characterized in that** the first inductor (10) is adjustable relative to the second inductor (20) perpendicularly to the layer build-up direction and/or in the layer build-up direction and/or perpendicularly to an adjustment direction of the adjustable second inductor (20).

5. Device according to any of the preceding claims, **characterized in that**, at least in an operating position, an active surface (12) facing the working chamber, in particular a turn nearest to the working chamber, of the first inductor (10) is spaced from an active surface (21) facing the working chamber, in particular a turn nearest to the working chamber, of the second inductor (20) in the layer build-up direction or perpendicularly to the layer build-up direction by at least one wall thickness (t) of the first inductor (10) at the active surface facing the working chamber.

6. Device according to any of the preceding claims, **characterized in that** the first inductor (10) comprises two, in particular at least substantially parallel, legs, which extend between two, in particular at least substantially parallel, legs of the second inductor (20), in particular at least substantially perpendicularly thereto or in parallel therewith.

7. Device according to any of the preceding claims, **characterized in that** the first and/or second inductor (10, 20) is arranged on a distributing means, in particular a slide (1), which is arranged in the working chamber so as to arrange starting material (4) layer by layer.

8. Device according to claim 7, **characterized in that** the first inductor (10) is fixedly or adjustably arranged on the distributing means.

9. Device according to either claim 7 or claim 8, **characterized in that** the second inductor (20) is fixedly or adjustably arranged on the distributing means.

10. Device according to any of claims 7 to 9, **characterized in that** the distributing means comprises an adjustable, in particular retractable, blade (3) for arranging starting material in the working chamber layer by layer.

11. Method for generatively producing a component, in particular a gas turbine engine component (7A, 7B), by means of a device according to any of the preceding claims, comprising the steps of:
locally solidifying, layer by layer, a starting material (4) arranged in the working chamber, in order to produce the component layer by layer in the layer build-up direction; and
inductively controlling the temperature in specified regions of the working chamber by means of the movable induction heating assembly before, during or after at least one component layer (7A, 7B) has been solidified;
wherein, during the temperature control process, the first inductor (10) engages at least temporarily in the second inductor (20) in the direction of the working chamber and wherein the first inductor (10) is adjusted (11) relative to the second inductor.

## Revendications

1. Dispositif de fabrication générative d'un composant (7A, 7B), en particulier d'un composant de moteur à turbine à gaz, comprenant :
un espace de travail ;
un moyen de solidification, en particulier un laser (6), destiné à solidifier localement par couche une matière de départ (4), disposée dans l'espace de travail, pour fabriquer le composant par couches dans une direction de construction de couches ; et
un dispositif de chauffage par induction mobile comprenant un premier inducteur (10) et un deuxième inducteur (20) destinés à réguler la température de manière inductive dans des zones prédéterminables de l'espace de travail ;
au moins dans une position de fonctionnement, le premier inducteur (10) s'engageant dans le deuxième inducteur (20) en direction de l'espace de travail et le premier inducteur (10) étant déplaçable par rapport au deuxième inducteur (11).

2. Dispositif selon la revendication précédente, **caractérisé en ce que** le premier inducteur (10) est déplaçable (11) par moteur par rapport au deuxième inducteur (20).

3. Dispositif selon la revendication précédente, **caractérisé en ce que** le premier inducteur (10) est monté de manière déplaçable (11), notamment par moteur, sur le deuxième inducteur (20).

4. Dispositif selon l'une des deux revendications précédentes, **caractérisé en ce que** le premier inducteur (10) peut être déplacé par rapport au deuxième inducteur (20) perpendiculairement à la direction de construction de couches et/ou dans la direction de construction en couches et/ou perpendiculairement à la direction de déplacement du deuxième inducteur déplaçable (20).

5. Dispositif selon l'une des revendications précédentes, **caractérisé en ce que,** au moins dans une position de fonctionnement, une surface active (12) tournée vers l'espace de travail, en particulier un enroulement proche de l'espace de travail, du premier inducteur (10) est espacée d'une surface active (21) tournée vers l'espace de travail, en particulier d'un enroulement proche de l'espace de travail, du deuxième inducteur (20) dans la direction de construction de couches ou perpendiculairement à la direction de construction de couches de moins d'une épaisseur de paroi (t) du premier inducteur (10) au niveau de la surface active tournée vers l'espace de travail.

6. Dispositif selon l'une des revendications précédentes, **caractérisé en ce que** le premier inducteur (10) comporte deux branches, notamment au moins sensiblement parallèles, qui s'étendent entre deux branches, notamment au moins sensiblement parallèles, du deuxième inducteur (20), notamment au moins sensiblement perpendiculairement ou parallèlement à celles-ci.

7. Dispositif selon l'une des revendications précédentes, **caractérisé en ce que** le premier et/ou le deuxième inducteur (10, 20) sont disposés au niveau d'un moyen de distribution, notamment d'un coulisseau (1), pour disposer en couches la matière de départ (4) dans l'espace de travail.

8. Dispositif selon la revendication 7, **caractérisé en ce que** le premier inducteur (10) est disposé de manière fixe ou réglable au niveau du moyen de distribution.

9. Dispositif selon la revendication 7 ou 8, **caractérisé en ce que** le deuxième inducteur (20) est disposé de manière fixe ou réglable au niveau du moyen de distribution.

10. Dispositif selon l'une des revendications 7 à 9, **caractérisé en ce que** le moyen de distribution comporte une lame (3) réglable, notamment rétractable, pour disposer en couches la matière de départ dans l'espace de travail.

11. Procédé de fabrication générative d'un composant, en particulier d'un composant de moteur à turbine à gaz (7A, 7B), au moyen d'un dispositif selon l'une des revendications précédentes, le procédé comprenant les étapes :
de solidification locale en couches de la matière de départ (4) disposée dans l'espace de travail pour fabriquer le composant par couches dans la direction de construction de couches ; et
de régulation de température par induction dans des zones prédéterminées de l'espace de travail au moyen du dispositif de chauffage à induction mobile avant, pendant et/ou après la solidification d'au moins une couche de composant (7A, 7B) ;
lors de la régulation de température, le premier inducteur (10) s'engageant au moins temporairement dans le deuxième inducteur (20) en direction de l'espace de travail et le premier inducteur (10) étant réglé par rapport au deuxième inducteur (11).
